# EUROPEAN PATENT SPECIFICATION

(11) **EP 4 528 506 B1**
(45) Date of publication and mention of the grant of the patent: **07.10.2026**
(21) Application number: 24160092.3
(22) Date of filing: 27.02.2024
(51) Int. Cl.: G06F 9/48, G06F 9/52

(54) **SYSTEM AND COMPUTER FOR ACHIEVING HARDWARE REAL-TIME SIMULATION IN A NON-REAL-TIME SYSTEM FOR HARDWARE-IN-LOOP SIMULATION**
SYSTEM UND COMPUTER ZUR DURCHFÜHRUNG EINER HARDWARE-ECHTZEITSIMULATION IN EINEM NICHT-ECHTZEITSYSTEM ZUR HARDWARE-IN-LOOP-SIMULATION
SYSTÈME ET ORDINATEUR POUR RÉALISER UNE SIMULATION EN TEMPS RÉEL DE MATÉRIEL DANS UN SYSTÈME EN TEMPS NON RÉEL POUR UNE SIMULATION EN BOUCLE DE MATÉRIEL

(30) Priority: 22.09.2023 US 202318371543; 19.10.2023 CN 202311360067
(43) Date of publication of application: 26.03.2025
(73) Proprietor: Shanghai Tosun Technology Ltd., Shanghai 201804 (CN)
(72) Inventor: Liu, Chu, Shanghai (CN); Xie, Yueyin, Shanghai (CN); Mo, Mang, Shanghai (CN)
(74) Representative: Lapienis, Juozas

(56) References cited:
- EP-B1- 3 364 296
- CHEN KEKE ET AL: "Real-time Extension Technologies on the Windows Operation System", 2019 IEEE 8TH JOINT INTERNATIONAL INFORMATION TECHNOLOGY AND ARTIFICIAL INTELLIGENCE CONFERENCE (ITAIC), IEEE, 24 May 2019 (2019-05-24), pages 789 - 793, XP033589256, DOI: 10.1109/ITAIC.2019.8785468

## Description

### TECHNIC FIELD

The present disclosure relates to the field of vehicular software development technologies, and in particular to a method of achieving hardware real-time simulation in a non-real-time system of a hardware-in-loop simulation.

### BACKGROUND

In order to execute a hardware-in-loop simulation task, it is usually required to rely on a real-time system and deploy the execution of the task in the real-time system. The real-time system is in another computer rather than in the local and hence has to perform any action by remote calling, leading to the problem of inability to directly observe those related signals and key signals determining algorithm function and performance.

The article "Real-time Extension Technologies on the Windows Operation System" by Chen Keke et al. discloses a real-time extension on Windows system to improve its scheduling and task dealing compatibilities. The extension can meet the real-time requirements of applications. Document EP 3364296 B1 relates to a method for simulation of a real-time system on a workstation, the method comprising: using a block-oriented simulation system for simulating a model of the real-time system; wherein the model is represented by a block diagram composed of at least one block that represents the at least one task, wherein, for the purpose of simulation, each task is implemented by a task function composed of a sequence of one or more code segments, wherein an execution time concerning execution by the target hardware is associated with each code segment, and wherein the simulation system includes a simulation engine that controls the execution of each task; and wherein each task function is executed in a separate task thread, and when the execution of the task function reaches the end of a code segment, a current simulation time provided by the simulation engine is compared with a desired execution time and execution of the task thread is suspended, when the current simulation time has not reached the desired execution time; the desired execution time being determined based on the execution times associated with the one or more code segments. However, there still exists a problem of optimizing the performance of the system in which the hardware real-time simulation is performed.

### SUMMARY

The present disclosure provides a method of achieving hardware real-time simulation in a non-real-time system of a hardware-in-loop simulation, comprising: creating a real-time model task and forming a task program; automatically reading, by the task program, computer configuration and determining a number Z of cores of a processor of a current computer device; when the number Z of the cores is less than or equal to X, setting a thread number to n=1 to execute the real-time model task, and when the number Z of the cores is greater than X, setting the thread number to n=(Z-X)/Y to execute the real-time model task, wherein Y represents the number of threads of one physical core of the processor, wherein, setting the thread number to n=1 to execute the real-time model task comprises: defining a real-time time interval m for the execution of the real-time model task; obtaining a current time t by the thread in real time, and determining, in real time, whether the current time t is greater than a next execution time t_next, when t>t_next, determining t_next= t_next+m and executing the real-time model task at the same time; wherein, setting the thread number to n=(Z-X)/Y to execute the real-time model task comprises: defining a real-time time interval m for execution of the real-time model task; obtaining, by each thread, the corresponding current time t in real time at the same time, and determining whether the corresponding current time t is greater than a next execution time t_next; when at least one thread detects t>tnext, the thread attempts to enter a critical section, and the thread successfully entering the critical section performs the following contents in the critical section: repetitively obtaining the current time t and determining whether the current time t is greater than the next execution time t_next; when t>t_next, determining t_next= t_next+m and executing the real-time model task at the same time, and exiting the critical section; when t≤t_next, directly exiting the critical section; each set thread occupies one physical core of the processor, comprising: an index of the processor physical core occupied by each thread being equal to a value obtained from performing Modulo Operation on the corresponding thread index and a total number of processor physical cores. Further, when the real-time model task is executed for a first time, t_next=m, and t=0. Furthermore, those threads unsuccessfully entering the critical section are blocked from entering the critical section until the thread entering the critical section leaves the critical section, and then start a next attempt.

According to a second aspect, the present disclosure further provides a computer readable storage medium, storing computer readable instructions, wherein the computer readable instructions are executed by at least one processor to perform the above-mentioned method.

According to a third aspect, the present disclosure further provides an electronic device, comprising a processor, a readable storage medium, a communication bus and a communication interface, wherein the processor, the readable storage medium and the communication interface communicate with each other via the communication bus; the readable storage medium is configured to store at least one program that performs the method of achieving hardware real-time simulation in a non-real-time system of a hardware-in-loop simulation as described above; and the program causes the processor to perform the operations corresponding to the method of achieving hardware real-time simulation in a non-real-time system of a hardware-in-loop simulation.

According to a fourth aspect, the present disclosure further provides a computer program product, comprising: a computer program or instruction, where the computer program or instruction is executed on a computer to cause the computer to perform the method as described above.

The summary of the present disclosure aims to provide brief descriptions for the subjects of the specification. Thus, it should be understood that the above features are only illustrative and shall not be interpreted as narrowing the scope or essence of the subject of the specification in any way.

Other features, aspects and advantages of the subjects of the present disclosure will become apparent by way of the specific embodiments, drawings and claims.

### BRIEF DESCRIPTION OF THE DRAWINGS

In order to more clearly describe the technical solutions in the specific embodiments of the present disclosure or the prior arts, the drawings required for descriptions of the specific embodiments or the prior arts will be briefly introduced. Apparently, the drawings described hereunder are only some embodiments of the present disclosure. Those skilled in the art can also obtain other drawings based on these drawings without making creative work.
FIG. 1 is a schematic diagram illustrating steps of a method of achieving hardware real-time simulation in a non-real-time system of a hardware-in-loop simulation according to the embodiments of the present disclosure.
FIG. 2 is a principle block diagram illustrating a system for achieving hardware real-time simulation in a non-real-time system of a hardware-in-loop simulation, which is not according to the invention and is present for illustration purposes only.
FIG. 3 is a principle block diagram illustrating an electronic device according to the embodiments of the present disclosure.

### DETAILED DESCRIPTION OF THE EMBODIMENTS

In order to make the object, technical solutions and advantages of the embodiments of the present disclosure clearer, the technical solutions of the present disclosure will be fully and clearly described in combination with drawings. Apparently, the embodiments described herein are only some embodiments rather than all embodiments. All other embodiments obtained by those skilled in the art based on these drawings without making creative work shall fall within the scope of protection of the present disclosure.

At present, when similar softwares perform a hardware-in-loop task, hard real time is usually achieved by a real-time system. This requires more hardware investment and deployment costs. But, in a method of achieving hardware real-time simulation in a non-real-time system of a hardware-in-loop simulation in the embodiments, hard real time can be achieved by the non-real-time system without adding the real-time system.

Specifically, one or more embodiments provide a method of achieving hardware real-time simulation in a non-real-time system of a hardware-in-loop simulation, which includes:
Step S101, creating a real-time model task and forming a task program;
Step S102, automatically reading, by the task program, computer configuration and determining a number Z of processor cores of a current computer device; when the number Z of the cores is not greater than X, setting a thread number to n=1 to execute the real-time model task, and otherwise, setting the thread number to n=(Z-X)/Y to execute the real-time model task, wherein Y represents the number of threads of one physical core of the processor.

In the method of achieving hardware real-time simulation in the non-real-time system of the hardware-in-loop simulation in the embodiments, when the hardware-in-loop simulation task is executed, a virtual hard real time environment can be directly run in a personal computer to achieve hard real time, namely, it can be done without purchasing the real-time system. Further, because all operations are performed locally, the development test efficiency is greatly increased and the flexibility of simulation signal observation and modification is improved. For example, when it is desired to observe a local variable, local program codes can be modified at any time to add print information, observation information, curve plotting signal information and other function information. Once locally compiled, the program codes can be immediately run with high efficiency. But, in a conventional method, it is required to, for the local variable, design an input and output interface, update a simulation model interface table and compile the entire code program and re-deploy the real-time system software and then remotely run the simulation model and then perform observation.

In combination with the accompanying drawings, various non-limiting implementations of the embodiments of the present disclosure will be described in details below.

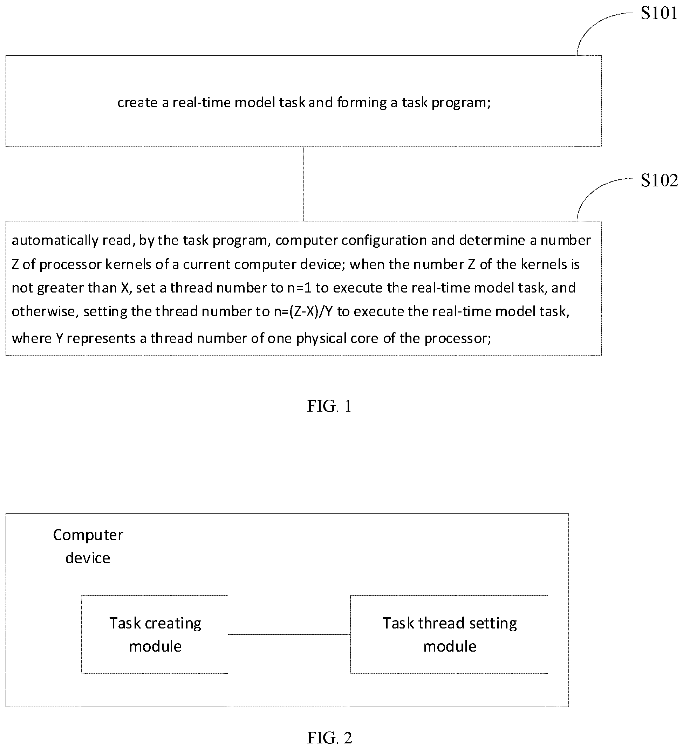

As shown in FIG. 1, one or more embodiments provide a method of achieving hardware real-time simulation in a non-real-time system of a hardware-in-loop simulation, including:
Step S101, creating a real-time model task and forming a task program;
Step S102, automatically reading, by the task program, computer configuration and determining a number Z of processor cores of a current computer device; when the number Z of the cores is not greater than X, setting a thread number to n=1 to execute the real-time model task, and otherwise, setting the thread number to n=(Z-X)/Y to execute the real-time model task,
wherein Y represents the number of threads of one physical core of the processor.

Specifically, the real-time model task is a timing program. The real-time model task is created by creating a timer first. After the timer is created, a period of the timer is set, for example, to 500 microseconds. Next, based on the period, timed call is performed on the step function of the model, and the formed task program is a code module for simulation of the real-time model task.

The number Z of the processor cores is determined by the processor model and different processor models may have distinctly different numbers Z of kernels. For example, the kernel number Z of Intel Xeon Platinum 9282 is 56 whereas the kernel number Z of the Intel Core i5-2520M is 2.

When Z is not greater than X, it indicates that the current computer has a weak performance and is unable to allocate multiple threads to execute simulation and otherwise the computer will be frozen. At this time, it is proper for a single thread to execute the real-time model task, namely, the thread number is set to n=1 to execute the real-time model task.

When Z is greater than X, in order to prevent the computer to allocate multiple threads to execute simulation in a case of weak performance, it is required to limit a minimum value of X, namely, limit the minimum value of the kernel number Z of the computer executing the simulation task with multiple threads. In an extreme case, when X=0, the thread number n =Z / Y is just equal to the number of the true physical cores; when X is not 0, it indicates that X/Y true physical cores are reserved as own cores not involved in simulation, so as to ensure smooth operation of the software system and other softwares.

As one implementation in the embodiments, setting the thread number to n=1 to execute the real-time model task includes:
defining a real-time time interval m for execution of the real-time model task;
obtaining a current time t by the thread in real time, and determining, in real time, whether the current time t is greater than a next execution time t_next,
when t>t_next, determining t_next= t_next+m and executing the real-time model task at the same time.

It should be noted that when the real-time model task is executed for the first time, t_next=m, and t=0.

Specifically, in combination with an example, detailed descriptions are made on the method of executing the real-time model task when n=1.

If X=4, when the processor model of the computer device is Intel Core i5-2520M, the kernel number Z is 2 less than 4, which indicates that the current computer device has weak performance and is unable to allocate multiple threads to execute simulation, and otherwise, the computer will be frozen. At this time, it is proper for a single thread to execute the real-time model task, namely, the thread number is set to n=1 to execute the real-time model task.

Since there is only one thread to execute the real-time model task, there is no preemption for multiple threads when the operation of determining whether the current time t is greater than a next execution time t_next is performed. Therefore, it is no need to perform thread synchronization by use of critical section or the like, so as to reduce performance overhead incurred by the introduction of the critical section. But, the defect of the single thread is also reflected. When the processor time slice of the thread is suspended due to operating system scheduling, the locking accuracy of the time of t_next will be lowered.

When the single thread executes the real-time model task, the real-time time interval for execution of the real-time model task is set to m = 500 microseconds. The pseudocodes for the thread to execute the real-time model task are as follows:

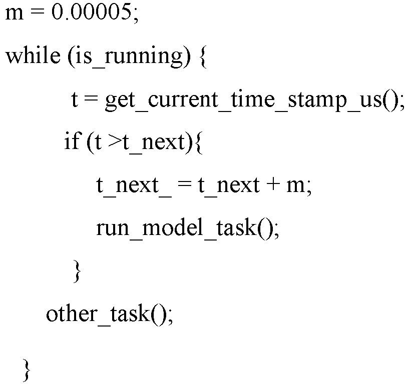

Wherein "is_running" is a simulation running enable flag; when the simulation is terminated by a user, or exited naturally, the flag is false and the algorithm will no longer executes while cycle; "get_current_time_stamp_us()" is an internal function of simulation system, used to obtain a timestamp of the current time measured in the unit of microsecond; "run_model_task()" is an internal function of simulation system, used to periodically call the step function of the model; "other_task()" is other tasks of simulation system, for example, Sleep(1) can be executed therein to reduce the consumption of the current processor for the processor time.

As one implementation in the embodiments, when the thread number is n=(Z-X)/Y, and the kernel number Z is greater than X, it indicates that it is proper for the processor of the current computer device to enable multi-thread simulation. The method of executing the real-time model task includes:
defining a real-time time interval m for execution of the real-time model task;
obtaining, by each thread, the corresponding current time t in real time at the same time, and determining whether the corresponding current time t is greater than a next execution time t_next;
when at least one thread detects t>t_next, the thread attempts to enter a critical section, and at this time, other threads are blocked from entering the critical section; after the thread successfully enters the critical section, the previous flag for the thread to determine t>t_next is invalid, and thus, the thread successfully entering the critical section performs the following contents in the critical section:
repetitively obtaining the current time t and determining whether the current time t is greater than a next execution time t_next;
if yes, determining t_next= t_next+m and executing the real-time model task at the same time, and exiting the critical section;
if not, directly exiting the critical section.

Specifically, in combination with an example, the method of executing the real-time model task when n=(Z-X)/Y is detailed below:
It is supposed that X=2, and Y=2. When the processor model of the computer device is Intel Core i7-8700, the kernel number Z is 6 greater than 2, and hence, the thread number is set to n=(Z-X)/Y=(6 - 2) / 2=2 to execute the real-time model task.

Two threads are defined as thread 0 and thread 1.

When the real-time time interval for execution of the real-time model task is set to m=500 microseconds, the pseudocodes for each thread to execute the model task are as follows: 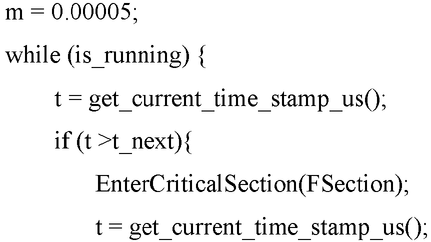 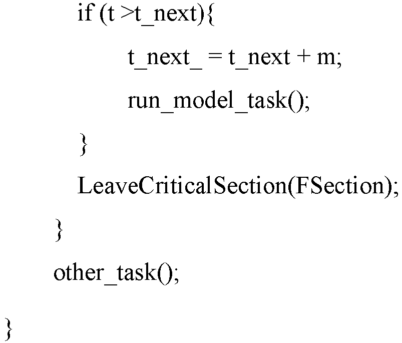 wherein "is_running" is a simulation running enable flat; when the simulation is terminated by a user, or exited naturally, the flag is false and the algorithm will no longer executes while cycle; "get_current_time_stamp_us()" is an internal function of simulation system, used to obtain a timestamp of the current time measured in the unit of microsecond; "EnterCriticalSection" is an API function of Windows system for entering the critical section; "FSection" is a critical section object shared by multiple threads; "LeaveCriticalSection" an API function of Windows system for exiting the critical section; "run_model_task()" is an internal function of simulation system, used to periodically call the step function of the model; "other_task()" is other tasks of simulation system, for example, Sleep(1) can be executed therein to reduce the consumption of the current processor for the processor time.

The above pseudocodes effectively relieve the case of the reduced simulation time accuracy resulting from suspension of the processor time of the single thread due to system scheduling, and in other words, the simulation time accuracy can be effectively guaranteed by the above method, so as to ensure the simulation real-timeness.

The threads unsuccessfully entering the critical section are blocked from entering the critical section until the thread entering the critical section leaves the critical section and then start a next attempt.

Taking the method of executing the real-time model task when the thread number is set to n=2 as an example, when the thread 0 fails to determine a next execution time t_next due to system scheduling, and it is highly possible that the thread 1 determines the next execution time t_next and when detecting t>t_next, successfully enters the critical section, so as to preemptively execute the model task. At this time, the thread 0 is blocked in the code lines for entering the critical section. Only when the thread 1 completes the execution of the real-time model task and exits the critical section can the thread 0 start determining whether the current time t is greater than a next execution time t_next. If the thread 0 successfully enters the critical section at this time, it can update the current time t once, namely, repetitively obtain the current time t and determine the current time t is already less than the next execution time t_next (the next execution time t_next is already updated by the thread 1), and thus, the thread 0 will not execute the real-time model task but exit the critical section immediately to wait for a next determination.

The thread successfully entering the critical section is determined by the critical section independently, and in other words, the thread successfully entering the critical section is determined randomly by Windows system.
t_next is a common global variable of the threads, and that is, multiple threads can access a same variable at the same time. Various threads can share and access a same variable, and thus any thread can immediately attempt to enter the critical section once firstly finding the current time t is greater than the next execution time t _next, which effectively relieves the case of the reduced simulation time accuracy resulting from cancellation of the processor time of the single thread due to system scheduling, effectively ensuring the simulation time accuracy.

Each set thread occupies one physical core of the processor, including:
an index of the processor physical core occupied by each thread being equal to a value obtained from performing Modulo Operation on the corresponding thread index and a total number of processor physical cores.

Each set thread occupies one physical core of the processor to bring the computer device to optimal performance.

For example, there are a total of 10 threads, and a total of 8 processor physical cores and thus, the index of the processor physical core occupied by the thread 0 is a value obtained from performing Modulo Operation on 0 and 8, where the value is 0; and the index of the processor physical core occupied by the thread 9 is a value obtained from performing Modulo Operation on 9 and 8, where the value is 1.

In the method of achieving hardware real-time simulation in the non-real-time system of the hardware-in-loop simulation in the present disclosure, when the hardware-in-loop simulation task is executed, a virtual hard real time environment can be directly run in a personal computer to achieve hard real time, namely, it can be done without purchasing the real-time system. Further, because all operations are performed locally, the development test efficiency is greatly increased and the flexibility of simulation signal observation and modification is improved.

In the embodiments, an electronic device includes a processor, a readable storage medium, a communication bus and a communication interface, wherein the processor, the readable storage medium and the communication interface communicate with each other via the communication bus; the readable storage medium is configured to store at least one program that performs the method of achieving hardware real-time simulation in the non-real-time system of the hardware-in-loop simulation; and the program causes the processor to perform the operations corresponding to the method of achieving hardware real-time simulation in the non-real-time system of the hardware-in-loop simulation.

In the embodiments, in an electronic device, setting the thread number to n=1 to execute the real-time model task includes:
defining a real-time time interval m for execution of the real-time model task;
obtaining a current time t by the thread in real time, and determining, in real time, whether the current time t is greater than a next execution time t_next,
when t>t_next, determining t_next= t_next+m and executing the real-time model task at the same time.

In the embodiments, in an electronic device, when the real-time model task is executed for a first time, t_next=m, and t=0.

In the embodiments, in an electronic device, setting the thread number to n=(Z-X)/Y to execute the real-time model task includes:
defining a real-time time interval m for execution of the real-time model task;
obtaining, by each thread, the corresponding current time t in real time at the same time, and determining whether the corresponding current time t is greater than a next execution time t_next;
when at least one thread detects t>t_next, the thread attempts to enter a critical section, and the thread successfully entering the critical section performs the following contents in the critical section:
   repetitively obtaining the current time t and determining whether the current time t is greater than the next execution time t_next;
   when t>t_next, determining t_next= t_next+m and executing the real-time model task at the same time, and exiting the critical section;
   when t<t_next, directly exiting the critical section.

In the embodiments, in an electronic device, those threads unsuccessfully entering the critical section are blocked from entering the critical section until the thread entering the critical section leaves the critical section, and then start a next attempt.

In the embodiments, in an electronic device, the thread successfully entering the critical section is determined by the critical section independently.

In the embodiments, in an electronic device, t_next is a common global variable of various threads.

In the embodiments, in an electronic device, each set thread occupies one physical core of the processor, including:
an index of the processor physical core occupied by each thread being equal to a value obtained from performing Modulo Operation on the corresponding thread index and a total number of processor physical cores.

An electronic device in some embodiments will be described below from the angle of hardware processing.

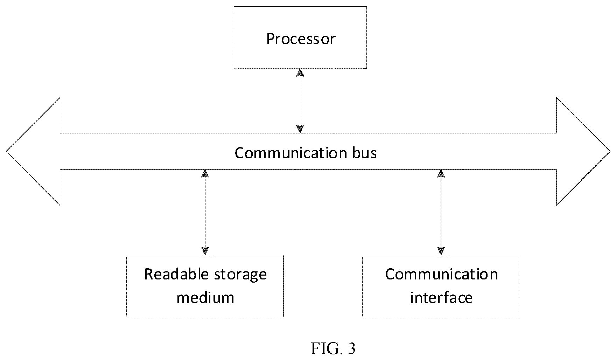

FIG. 3 shows an example implementation of the electronic device.

In some embodiments, the communication interface may be RS232, RS485, USB interface or TYPE interface or the like, which may be connected with an external bus adapter. The communication interface may also include wired or wireless network interface. The network interface may optionally include wired interface and/or wireless interface (such as WI-FI interface, Bluetooth interface and the like), which is usually used to establish communication connection between the server and other computer devices.

The readable storage medium or the computer readable storage medium includes at least one type of memories. The memory includes flash memory, harddisk drive, multimedia card, card type memory (e.g. SD memory or the like), magnetic memory, magnetic disk or compact disk or the like. In some embodiments, the memory may be an internal storage unit in the computer device, for example, a harddisk drive of the computer device. In some other embodiments, the memory may also be an external storage device of the computer device, for example, a plug type hard disk drive, a smart media card (SMC), a secure digital (SD) card, a flash card or the like on the computer device. Furthermore, the memory may include both the internal storage unit in the computer device and the external storage device. The memory may be used to not only store an application software installed on the computer device and various types of data, for example, the codes of the computer program and the like but also temporarily store data already output or to be output.

In some embodiments, the processor may be a central processing unit (CPU), a processor, a controller, a microcontroller, a microprocessor or another data processing chip, which is used to run the program codes in the memory or process the data, for example, execute the computer program or the like.

In some embodiments, the communication bus may also be an input/output bus, which may be a Peripheral Component Interconnect (PCI) bus, or an Enhanced Industry Standard Architecture (EISA) bus or the like. The bus may include an address bus, a data bus and a control bus and the like.

The processor executes the above program to perform the steps in the embodiments of the method of achieving hardware real-time simulation in the non-real-time system of the hardware-in-loop simulation as shown in FIG. 1, for example, the steps S101 to S102 shown in FIG. 1. Alternatively, the processor executes the computer program to implement the functions of the modules or units in the each device embodiment as above.

One or more embodiments further provide a computer readable storage medium configured to store at least one program that performs the above method of achieving hardware real-time simulation in the non-real-time system of the hardware-in-loop simulation in the above embodiments and the program is executed by a processor to perform the specific steps of the method of achieving hardware real-time simulation in the non-real-time system of the hardware-in-loop simulation, which can be referred to the specific descriptions of the above method of achieving hardware real-time simulation in the non-real-time system of the hardware-in-loop simulation and will not be repeated herein.

One or more embodiments further provide a computer program product, including at least one computer program or instruction, where the computer program or instruction are executed on a computer to cause the computer to perform any one of the above methods of achieving hardware real-time simulation in the non-real-time system of the hardware-in-loop simulation.

In the several embodiments provided by the present disclosure, it should be understood that the disclosed device and method can be implemented another way. The above device embodiments are merely illustrative, for example, the flowcharts or block diagrams in the drawings show possible system architectures, functions and operations of the device, method, and computer program product in the several embodiments provided by the present disclosure. Thus, each block in the flowcharts or block diagrams may represent one module, one program fragment or one part of codes. The module, the program fragment or the part of codes includes one or more executable instructions for implementing the specified logic functions. It should be noted that in some alternative embodiments, the functions indicated in the blocks may also be performed in a sequence different from that indicated in the drawings. For example, two continuous blocks can be actually performed basically in parallel, and sometimes may be performed in a reverse sequence, which is dependent on the functions involved. It is further noted that each block in the block diagrams and/or flowcharts and the combinations of the blocks in the block diagrams and/or flowcharts may be implemented by a dedicated hardware-based system for executing specified functions or actions, or by combination of dedicated hardware and computer instructions.

Furthermore, the functional modules in the embodiments of the present disclosure can be integrated into one independent part, or exist as separate modules or two or more of the modules are integrated into one independent part.

The functions, when implemented by software function modules and sold or used as independent products, can be stored in one computer readable storage medium. Based on such understanding, the essence of technical solutions of the present disclosure, or a part contributing to the prior arts or a part of the technical solutions can be embodied in the form of software product. The computer software product is stored in one storage medium which includes several instructions to enable one computer device (for example, a personal computer, a server, or a network device or the like) to perform all or part of the steps of the method of each of the embodiments of the present disclosure.

Enlightened by the ideal embodiments of the present disclosure, relevant workers can, based on the contents of the specification, make various changes and modifications within the scope of protection of the technical idea of the present disclosure. The technical scope of the present disclosure is not limited to the contents of the specification but to the technical scope claimed by the claims.
achieving hardware real-time simulation in the non-real-time system of the hardware-in-loop simulation.

In some embodiments, a computer readable storage medium, storing computer readable instructions, wherein the computer readable instructions are executed by at least one processor to perform the method :
creating a real-time model task and forming a task program;
automatically reading, by the task program, computer configuration and determining a number Z of processor cores of a current computer device; when the number Z of the cores is not greater than X, setting a thread number to n=1 to execute the real-time model task, and otherwise, setting the thread number to n=(Z-X)/Y to execute the real-time model task,
wherein Y represents the number of threads of one physical core of the processor.

In some embodiments, a computer program product, including a computer readable storage medium on which computer readable program codes are stored, wherein the computer readable program codes include instructions, which cause at least one processor (one or more computer devices) to perform the following operations:
creating a real-time model task and forming a task program;
automatically reading, by the task program, computer configuration and determining a number Z of processor cores of a current computer device; when the number Z of the cores is not greater than X, setting a thread number to n=1 to execute the real-time model task, and otherwise, setting the thread number to n=(Z-X)/Y to execute the real-time model task,
wherein Y represents the number of threads of one physical core of the processor.

In the several embodiments provided by the present disclosure, it should be understood that the disclosed device and method can be implemented another way. The above device embodiments are merely illustrative, for example, the flowcharts or block diagrams in the drawings show possible system architectures, functions and operations of the device, method, and computer program product in the several embodiments provided by the present disclosure. Thus, each block in the flowcharts or block diagrams may represent one module, one program fragment or one part of codes. The module, the program fragment or the part of codes includes one or more executable instructions for implementing the specified logic functions. It should be noted that in some alternative embodiments, the functions indicated in the blocks may also be performed in a sequence different from that indicated in the drawings. For example, two continuous blocks can be actually performed basically in parallel, and sometimes may be performed in a reverse sequence, which is dependent on the functions involved. It is further noted that each block in the block diagrams and/or flowcharts and the combinations of the blocks in the block diagrams and/or flowcharts may be implemented by a dedicated hardware-based system for executing specified functions or actions, or by combination of dedicated hardware and computer instructions.

Furthermore, the functional modules in the embodiments of the present disclosure can be integrated into one independent part, or exist as separate modules or two or more of the modules are integrated into one independent part.

The functions, when implemented by software function modules and sold or used as independent products, can be stored in one computer readable storage medium. Based on such understanding, the essence of technical solutions of the present disclosure, or a part contributing to the prior arts or a part of the technical solutions can be embodied in the form of software product. The computer software product is stored in one storage medium which includes several instructions to enable one computer device (for example, a personal computer, a server, or a network device or the like) to perform all or part of the steps of the method of each of the embodiments of the present disclosure.

Enlightened by the ideal embodiments of the present disclosure, relevant workers can, based on the contents of the specification, make various changes and modifications.

## Claims

1. A method of achieving hardware real-time simulation in a non-real-time system of a hardware-in-loop simulation, comprising:
creating a real-time model task and forming a task program;
automatically reading, by the task program, computer configuration and determining a number Z of cores of a processor of a current computer device; when the number Z of the cores is less than or equal to X, setting a thread number to n=1 to execute the real-time model task, and when the number Z of the cores is greater than X, setting the thread number to n=(Z-X)/Y to execute the real-time model task,
wherein Y represents the number of threads of one physical core of the processor;
wherein,
setting the thread number to n=1 to execute the real-time model task comprises:
defining a real-time time interval m for the execution of the real-time model task;
obtaining a current time t by the thread in real time, and determining, in real time, whether the current time t is greater than a next execution time t_next,
when t>t_next, determining t_next= t_next+m and executing the real-time model task at the same time;
wherein,
setting the thread number to n=(Z-X)/Y to execute the real-time model task comprises:
defining a real-time time interval m for execution of the real-time model task;
obtaining, by each thread, the corresponding current time t in real time at the same time, and determining whether the corresponding current time t is greater than a next execution time t_next;
when at least one thread detects t>t_next, the thread attempts to enter a critical section, and the thread successfully entering the critical section performs the following contents in the critical section:
repetitively obtaining the current time t and determining whether the current time t is greater than the next execution time t_next;
when t>t_next, determining t_next= t_next+m and executing the real-time model task at the same time, and exiting the critical section;
when t≤t_next, directly exiting the critical section;
each set thread occupies one physical core of the processor, comprising:
an index of the processor physical core occupied by each thread being equal to a value obtained from performing Modulo Operation on the corresponding thread index and a total number of processor physical cores.

2. The method of claim 1, wherein,
when the real-time model task is executed for a first time, t_next=m, and t=0.

3. The method of claim 1, wherein,
those threads unsuccessfully entering the critical section are blocked from entering the critical section until the thread entering the critical section leaves the critical section, and then start a next attempt.

4. A computer readable storage medium, storing computer readable instructions, wherein the computer readable instructions are executed by at least one processor to perform the method of any of claims 1-3.

5. An electronic device, comprising a processor, a readable storage medium, a communication bus and a communication interface, wherein the processor, the readable storage medium and the communication interface communicate with each other via the communication bus;
the readable storage medium is configured to store at least one program that performs the method of achieving hardware real-time simulation in a non-real-time system of a hardware-in-loop simulation of any of claims 1-3; and the program causes the processor to perform the operations corresponding to the method of achieving hardware real-time simulation in a non-real-time system of a hardware-in-loop simulation.

6. A computer program product, comprising:
a computer program or instruction, where the computer program or instruction is executed on a computer to cause the computer to perform the methods of any of claims 1-3.

## Patentansprüche

1. Ein Verfahren zur Durchführung einer Hardware-Echtzeitsimulation in einem Nicht-Echtzeitsystem einer Hardware-in-Loop-Simulation, umfassend:
Erstellen einer Echtzeitmodellaufgabe und Bilden eines Aufgabenprogramms;
automatisches Auslesen einer Computerkonfiguration durch das Aufgabenprogramm und Bestimmen einer Anzahl Z von Kernen eines Prozessors einer aktuellen Computervorrichtung; wenn die Anzahl Z der Kerne kleiner als oder gleich X ist, Einstellen einer Threadanzahl auf n=1 zum Ausführen der Echtzeitmodellaufgabe, und wenn die Anzahl Z der Kerne größer als X ist, Einstellen der Threadanzahl auf n=(Z-X)/Y zum Ausführen der Echtzeitmodellaufgabe,
wobei Y die Anzahl von Threads eines physischen Kerns des Prozessors darstellt;
wobei
das Einstellen der Threadanzahl auf n=1 zum Ausführen der Echtzeitmodellaufgabe umfasst:
Definieren eines Echtzeitintervalls m für die Ausführung der Echtzeitmodellaufgabe;
Ermitteln einer aktuellen Zeit t durch den Thread in Echtzeit und Bestimmen in Echtzeit, ob die aktuelle Zeit t größer als ein nächster Ausführungszeitpunkt t_next ist,
wenn t>t_next, Festlegen von t_next= t_next+m und gleichzeitiges Ausführen der Echtzeitmodellaufgabe;
wobei
das Einstellen der Threadanzahl auf n=(Z-X)/Y zum Ausführen der Echtzeitmodellaufgabe umfasst:
Definieren eines Echtzeitintervalls m für die Ausführung der Echtzeitmodellaufgabe;
gleichzeitiges Ermitteln der entsprechenden aktuellen Zeit t durch jeden Thread in Echtzeit und Bestimmen, ob die entsprechende aktuelle Zeit t größer als ein nächster Ausführungszeitpunkt t_next ist;
wenn mindestens ein Thread t>t_next detektiert, versucht der Thread, in einen kritischen Abschnitt einzutreten, und der erfolgreich in den kritischen Abschnitt eintretende Thread führt in dem kritischen Abschnitt Folgendes aus:
wiederholtes Ermitteln der aktuellen Zeit t und Bestimmen, ob die aktuelle Zeit t größer als der nächste Ausführungszeitpunkt t_next ist;
wenn t>t_next, Festlegen von t_next= t_next+m und gleichzeitiges Ausführen der Echtzeitmodellaufgabe sowie Verlassen des kritischen Abschnitts;
wenn t≤t_next, unmittelbares Verlassen des kritischen Abschnitts;
wobei jeder eingestellte Thread einen physischen Kern des Prozessors belegt und
der Index des von jedem Thread belegten physischen Kerns des Prozessors gleich einem Wert ist, der durch Anwenden einer Modulo-Operation auf den entsprechenden Thread-Index und die Gesamtzahl der physischen Kerne des Prozessors erhalten wird.

2. Das Verfahren nach Anspruch 1, wobei
bei einer ersten Ausführung der Echtzeitmodellaufgabe t_next=m und t=0 gilt.

3. Das Verfahren nach Anspruch 1, wobei
diejenigen Threads, die nicht erfolgreich in den kritischen Abschnitt eintreten, daran gehindert werden, in den kritischen Abschnitt einzutreten, bis der in den kritischen Abschnitt eingetretene Thread den kritischen Abschnitt verlässt, und wobei diese Threads anschließend einen nächsten Versuch starten.

4. Ein computerlesbares Speichermedium, das computerlesbare Anweisungen speichert, wobei die computerlesbaren Anweisungen von mindestens einem Prozessor ausgeführt werden, um das Verfahren nach einem der Ansprüche 1 bis 3 durchzuführen.

5. Eine elektronische Vorrichtung, umfassend einen Prozessor, ein lesbares Speichermedium, einen Kommunikationsbus und eine Kommunikationsschnittstelle, wobei der Prozessor, das lesbare Speichermedium und die Kommunikationsschnittstelle über den Kommunikationsbus miteinander kommunizieren;
das lesbare Speichermedium ist dazu eingerichtet, mindestens ein Programm zu speichern, das das Verfahren zur Durchführung einer Hardware-Echtzeitsimulation in einem Nicht-Echtzeitsystem einer Hardware-in-Loop-Simulation nach einem der Ansprüche 1 bis 3 durchführt; und das Programm veranlasst den Prozessor, die dem Verfahren zur Durchführung einer Hardware-Echtzeitsimulation in einem Nicht-Echtzeitsystem einer Hardware-in-Loop-Simulation entsprechenden Operationen durchzuführen.

6. Ein Computerprogrammprodukt, umfassend:
ein Computerprogramm oder eine Anweisung, wobei das Computerprogramm oder die Anweisung auf einem Computer ausgeführt wird, um den Computer zu veranlassen, die Verfahren nach einem der Ansprüche 1 bis 3 durchzuführen.

## Revendications

1. Procédé pour réaliser une simulation en temps réel de matériel dans un système non temps réel de simulation Hardware-in-the-Loop, comprenant :
la création d'une tâche de modèle en temps réel et la formation d'un programme de tâche ;
la lecture automatique, par le programme de tâche, d'une configuration informatique et la détermination d'un nombre Z de cœurs d'un processeur d'un dispositif informatique actuel ; lorsque le nombre Z de cœurs est inférieur ou égal à X, la fixation du nombre de fils d'exécution à n=1 pour exécuter la tâche de modèle en temps réel, et lorsque le nombre Z de cœurs est supérieur à X, la fixation du nombre de fils d'exécution à n=(Z-X)/Y pour exécuter la tâche de modèle en temps réel,
dans lequel Y représente le nombre de fils d'exécution d'un cœur physique du processeur ;
dans lequel
la fixation du nombre de fils d'exécution à n=1 pour exécuter la tâche de modèle en temps réel comprend :
la définition d'un intervalle temporel en temps réel m pour l'exécution de la tâche de modèle en temps réel ;
l'obtention, par le fil d'exécution, d'un instant courant t en temps réel, et la détermination, en temps réel, du fait que l'instant courant t est supérieur ou non à un prochain instant d'exécution t_next,
lorsque t>t_next, la détermination de t_next= t_next+m et, simultanément, l'exécution de la tâche de modèle en temps réel ;
dans lequel
la fixation du nombre de fils d'exécution à n=(Z-X)/Y pour exécuter la tâche de modèle en temps réel comprend :
la définition d'un intervalle temporel en temps réel m pour l'exécution de la tâche de modèle en temps réel ;
l'obtention simultanée, par chaque fil d'exécution, de l'instant courant t correspondant en temps réel, et la détermination du fait que l'instant courant t correspondant est supérieur ou non à un prochain instant d'exécution t_next ;
lorsqu'au moins un fil d'exécution détecte que t>t_next, le fil d'exécution tente d'entrer dans une section critique, et le fil d'exécution qui parvient à entrer dans la section critique effectue les opérations suivantes dans la section critique :
l'obtention répétée de l'instant courant t et la détermination du fait que l'instant courant t est supérieur ou non au prochain instant d'exécution t_next ;
lorsque t>t_next, la détermination de t_next= t_next+m et, simultanément, l'exécution de la tâche de modèle en temps réel, et la sortie de la section critique ;
lorsque t≤t_next, la sortie directe de la section critique ;
l'occupation, par chaque fil d'exécution ainsi configuré, d'un cœur physique du processeur, comprenant :
un indice du cœur physique du processeur occupé par chaque fil d'exécution étant égal à une valeur obtenue en effectuant une opération modulo sur l'indice correspondant du fil d'exécution et le nombre total de cœurs physiques du processeur.

2. Procédé selon la revendication 1, dans lequel
lorsque la tâche de modèle en temps réel est exécutée pour la première fois, t_next=m et t=0.

3. Procédé selon la revendication 1, dans lequel
les fils d'exécution n'ayant pas réussi à entrer dans la section critique sont empêchés d'entrer dans la section critique jusqu'à ce que le fil d'exécution ayant accédé à la section critique quitte celle-ci, après quoi lesdits fils d'exécution commencent une tentative suivante.

4. Support de stockage lisible par ordinateur, stockant des instructions lisibles par ordinateur, dans lequel les instructions lisibles par ordinateur sont exécutées par au moins un processeur pour mettre en œuvre le procédé selon l'une quelconque des revendications 1 à 3.

5. Dispositif électronique, comprenant un processeur, un support de stockage lisible, un bus de communication et une interface de communication, dans lequel le processeur, le support de stockage lisible et l'interface de communication communiquent entre eux par l'intermédiaire du bus de communication ;
le support de stockage lisible est configuré pour stocker au moins un programme qui met en œuvre le procédé pour réaliser une simulation en temps réel de matériel dans un système non temps réel de simulation Hardware-in-the-Loop selon l'une quelconque des revendications 1 à 3 ; et le programme amène le processeur à effectuer les opérations correspondant au procédé pour réaliser une simulation en temps réel de matériel dans un système non temps réel de simulation Hardware-in-the-Loop.

6. Produit programme d'ordinateur, comprenant :
un programme d'ordinateur ou une instruction qui, lors de son exécution sur un ordinateur, amène l'ordinateur à mettre en œuvre les procédés selon l'une quelconque des revendications 1 à 3.
